# EUROPEAN PATENT APPLICATION

(11) **EP 2 461 280 A1**
(43) Date of publication of application: **06.06.2012**
(21) Application number: 11190003.1
(22) Date of filing: 21.11.2011
(51) Int. Cl.: G06Q 10/00

(54) **Method and system for dynamically detecting illegal activity**

(30) Priority: 01.12.2010 US 957825
(71) Applicant: 9133 1280 Québec Inc., Rosemère, Québec J7A 4W5 (CA)
(72) Inventor: Aubertin Manon, Rosemère, Québec J7A 4W5 (CA)
(74) Representative: Wittmann, Günther

(57) **Abstract**

The present relates to a method and system for dynamically detecting illegal activity. The method and system collect new information, where the new information comprises at least an identity of an entity and a type of information. For each new information, the method and system determine whether there is at least one relation between the new information and at least one previous information stored in a storage module, and if there is at least one relation, a logical link is added between the new information and the at least one of the previous information with which there is the at least one relation. The method and system further verify whether the new information with the at least one previous information sharing the logical link correspond to at least one of a plurality of stored surveillance patterns, and if the new information with the at least one previous information sharing the logical link correspond to at least one of the plurality of stored surveillance patterns, a first type of alert is generated for the new information. The method and system further assign a risk factor to the new information, and verify whether the assigned risk factor is above a predetermined threshold, and if the assigned risk factor is above the predetermined threshold, generate a second type of alert. The method and system further integrate the new information in the storage module, and storing with the new information the logical link and the assigned risk factor.

## Description

### FIELD

The present relates to fraud detection, and more particularly to a method and a system for dynamically detecting illegal activity.

### BACKGROUND

Illegal activities are a sensitive business aspect. To that effect, many banks are equipped with systems to detect certain types of illegal activities. As it is rather easy to copy and fraudulently use certain types of information such as a credit card, financial institutions use a system to track various parameters such as: spending habits of credit card holders, funds transfers, bank account activities, so as to detect potential ongoing illegal activities or crimes related to money laundering and funding of terrorist activities at an early stage.

However, these systems detect only activities ongoing in that particular bank or financial institutions, and are adapted to detect illegal activities taking place directly through that bank. Illegal activities are reported in various fields and not only in banks. For example, illegal activities have been identified in fields such as real estate, insurance, broking, precious stones, expensive acquisition, car dealership, non-payment of income taxes and governmental taxes etc. Typically, detection of illegal activities in these various areas are performed by investigators compiling numerous records either digitally or manually. As the illegal activity may take place concurrently over various fields and multiple jurisdictions, detection is thus slow, and the illegal activities may take place over an extended period of time before being noticed. And as the efforts invested by authorities to detect such illegal activities are small compared to the number of illegal activities being performed, only few of the criminals actually get caught.

There is thus a need for a method and system for dynamically detecting illegal activities concurrently in multiple fields of activities and jurisdictions. There is also a need for providing a method and system for assisting and empowering businesses and merchants in early illegal activity detection.

### SUMMARY

In a first aspect, the present relates to a method for dynamically detecting illegal activity. The method collects new information comprising at least an identity of an entity and a type of information. Then, for each new information, the method determines whether there is at least one relation between the new information and at least one previous information stored in a storage module, and if there is at least one relation, adds a logical link between the new information and the at least one of the previous information with which there is the at least one relation. The method further verifies for each new information whether the new information with the at least one previous information sharing the logical link correspond to at least one of a plurality of stored surveillance patterns, and if the new information with the at least one previous information sharing the logical link correspond to at least one of the plurality of stored surveillance patterns, generates a first type of alert for the new information. The method further assigns for each new information a risk factor determined based on one or several of the following: the identity of the entity, the type of information, an amount or the at least one logical link. The method also verifies whether the assigned risk factor for the new information is above a predetermined threshold, and if the assigned risk factor is above the predetermined threshold, generates a second type of alert for the new information. The method also integrates the new information in the storage module, and stores with the new information the logical link and the assigned risk factor.

In another aspect, the present relates to a system for dynamically detecting illegal activity. The system comprises a communication module, a storage module, an analysis module, and an integration module. The communication module collects new information comprising at least an identity of an entity and a type of information. The storage module stores previous information, the new information, logical links, and surveillance patterns. The analysis module analyzes for each new information whether there is at least one relation between the new information and at least one previous information stored in the storage module, and if there is at least one relation, adds a logical link between the new information and the at least one of the previous information with which there is the at least one relation. The analysis module further analyzes a risk factor to be assigned to each new information, the risk factor being determined based on one or several of the following: the identity of the entity, the type of information, and the at least one logical link. The analysis module further determines whether the new information with the at least one previous information sharing the logical link correspond to at least one of the surveillance patterns, and if the new information with the at least one previous information sharing the logical link correspond to at least one of the surveillance patterns, generates by means of the communication module a first type of alert for the new information. The analysis module further determines whether the assigned risk factor for the new information is above a predetermined threshold, and if the assigned risk factor is above the predetermined threshold, generates by means of the communication module a second type of alert for the new information. The integration module integrates the new information, the logical link and the assigned risk in the storage module.

### BRIEF DESCRIPTION OF THE DRAWINGS

In the following description, the following drawings are used to describe and exemplify the present:

Figure 1 is a functional block diagram of the present system; and

Figure 2 is a flowchart of the present method.

### DETAILED DESCRIPTION

The present relates to a method and system for assisting merchants, financial institutions, brokers, companies, governments, law enforcement authorities, and any legal or moral entity in the fight against money laundering, illegal activities and financing of terrorist activities. For doing so, the present method and system perform dynamic identification of potential illegal activities, analysis, declaration to relevant legal authorities, dynamic surveillance, and generation of reports.

### Definitions

Throughout the present specification, the following expressions are used and are meant to be defined as follows:

Illegal activity: refers to any single or combination of the following activities: fraud, infringement, money laundering, thievery, financial malpractice, internet scams, computer crimes, personal physical security, criminal activities or any other activity or series of activities against the law. Although the singular form is used here through, it is done only for clarity purposes, and it is not meant to limit the scope of the present system and method to detection of only one illegal activity, but rather to render the present specification clearer. The present system and method are thus adapted to perform dynamic detection of at least one illegal activity.

New information: any information either being collected for the first time, or having been collected and stored previously, but being now updated, comprising new information related to an event/transaction.

Declaration indicator: indicator identifying an event/transaction that must be declared automatically.

Surveillance indicators: indicators used in defining patterns, stratagems, events or risky behaviors.
Surveillance pattern: based on surveillance indicators, and corresponding to patterns, stratagems, events or risky behaviors. The surveillance pattern may comprise one or a plurality of type of events/transactions sharing relations there between, which could follow a certain sequence, chronology and/or happen randomly. To that effect, the surveillance pattern comprises a plurality of events and/or transactions to be monitored, either in a certain order, and/or following a predetermined chronology, and/or taking place over a predetermined period of time, and/or taking place between predetermined types of parties, and/or taking place over certain jurisdictions. Each surveillance pattern comprises at least one of the following: an amount for the event/transaction activity, a sequence of events/transaction activities over time, a sequence of events/transaction activities over jurisdictions, a sequence of events/transaction activities over parties sharing a particular relationship.

Alert: notification that an event/transaction or a group of related events/transactions should be verified. The alert may be generated automatically by the system, or may be entered manually by a subscriber, a client, or an analyst.

Verification: verification of a transaction/event or group of transactions/event to validate whether the alert is justified, whether it should be escalated, or whether it is a false alarm.

Investigation: When an alert is escalated, an analysis of the corresponding event(s)/transaction(s), involved party(ies), surrounding events, and/or other criteria is performed. The analysis may lead or result to a legal investigation by legal authorities.

Declaration: Providing of information about a particular event/transaction or group of event(s)/transaction(s) to a third party to meet regulatory requirements.

Entities: Legal or moral bodies, such as for example companies, unions, organizations, governments.

Logical links: Virtual connections between two elements stored in the storage module. The virtual connections may further comprise context information such as: role, direction for the virtual connection (parent to child, child to parent), source of the link, etc.

Transaction: An exchange or transfer of goods, services or funds.

Event: The outcome of a personal, social or legal activity.

### New information

Throughout the present detailed description and claims, the expression 'new information' is used to refer to any new piece of information and/or updated information. The new information may originate from any of the following external sources, while not being limited to these external sources, and may relate to an event, a transaction or a combination thereof.

Sources of new information, either pushed to the communication module 110, or retrieved thereby comprise the following:

Financial institutions: information of various types of deposits, withdrawals, transfers, international money transfers, money exchange, bank drafts, traveler's checks, trust funds, loans, etc.

Currency exchange office: exchange operations (buying and/or selling currencies), exchange of check, etc.

Casino: buying and exchanging of tokens.

Accountant and notaries: information on registered events/transactions.

Credit cooperative: information on contracted loans, reimbursements, etc.

Life insurance companies: information on policies contracted, on claims, on evaluations, etc.

Real estate agents and companies: information on events/transactions performed.

Brokers and broking companies: information on events/transactions performed.

Dealers of precious stones and metals: information of events/transactions performed with buyers and suppliers.

Posting Companies: information about mailing events/transactions.

Revenue agency and governmental offices: information about income tax returns, revenue declarations, expenses information, etc. Merchants, traders and dealers: information on events/transactions performed with clients and suppliers for example for art and automobiles.

Credit office: information on credit rating.

Official lists: lists containing information about particular individuals and entities, such as for example lists provided by United Nations Office, Office of the Superintendent of Financial Institutions of Canada, United States Securities and Exchange Commission, the list of Non-Cooperative Countries and Territories, or the list of politically exposed individuals, etc.

Client database: complementary information about clients, when available, may further provide information such as signing authorities, company responsible(s), shareholder(s), family and commercial relationships, etc.

Investigation reports: information contained in reports either on events/transactions, commercial, fraudulent or individual activities.

Inventory : information related to theft and misappropriations.

Individual and organizational information: information about individuals and organizations such as identifications and identity proofs, roles and relations, etc.

Manually entered information : Information entered manually as new information, comprising for example : phone call, indexing of forms filled manually, etc.

Identity related: event related to an individual or an account, such as changing or modifying a proof of identity.

Internet: various types of information related to illegal activities and patterns to be monitored, public and private information, entity and context of the event/transaction activity, and/or any type of information that may be obtained from the Internet and proved to be useful in the dynamic surveillance of illegal activities.

### System

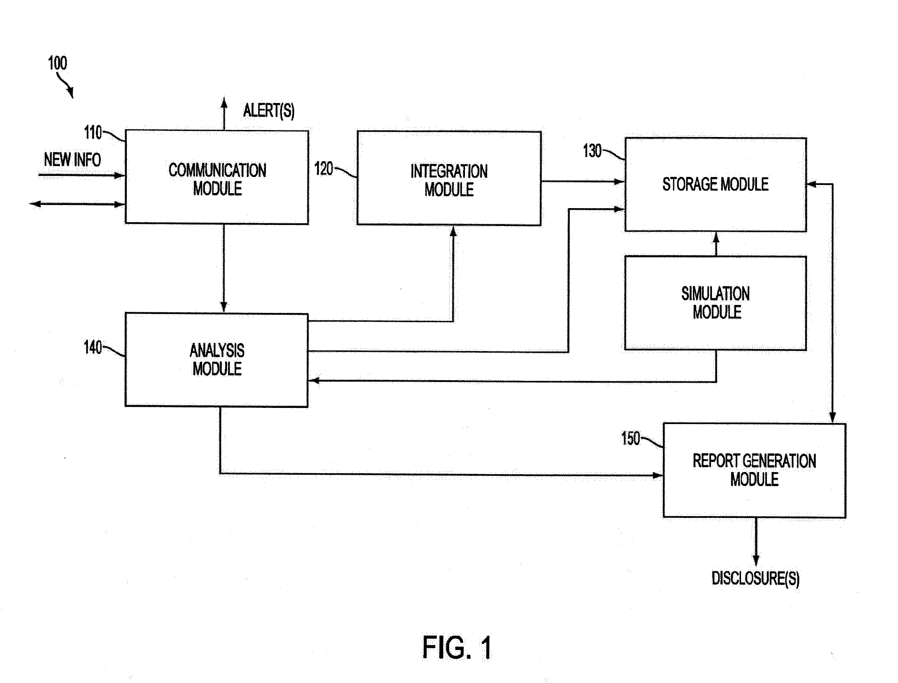

Reference is now made to Figure 1, which depicts an example of the present system. The system 100 comprises a communication module 110, an integration module 120, a storage module 130, and an analysis module 140. The communication module 110, the integration module 120, the storage module 130 and the analysis module 140 could be implemented in hardware, in software, or in a combination of both hardware or software. Although shown as distinct functional blocks, the communication module 110, the integration module 120, the storage module 130, the analysis module 140, and any other module of the present system, could be reorganized in various ways, and are not limited to separate implementation, but could be combined in alternate ways without departing from the present scope of protection.

The communication module 110 collects the new information. The communication module 110 is capable of receiving new information that is pushed by various external sources, not shown for clarity purposes. The communication module 110 is further capable of retrieving the new information from the plurality of various external sources or from different external sources. Each new information received or retrieved comprises at least an identity of an entity (individual, company, organization...), and a type of information. The identity of the entity may comprise one or several of the following, without being limited to those examples: a personal name, a company name, a company number, a personal identification number, and an alias. The type of information may comprise any of the following: an event, a date, a transaction, an amount, a recipient, a contributor, information on the type of event/transaction, information on the event/transaction itself, a jurisdiction in which the event/transaction took place, etc. The new information may further comprise more information, related to a event/transaction performed by the identified entity, and specific information about this event/transaction.

The storage module 130 stores previously analyzed information, logical links between the previously analyzed information, risk factor of the previously analyzed information, and surveillance patterns. As the new information comes into various formats, the present system 100 uses an integration module 120 to integrate the new information after its analysis to the storage module 130. After the new information has been analyzed, the integration may consist of one or several of the following aspects: formatting the new information, updating the stored information based on the received new information, adding the new information that is an update of prior information as a separate entry and creating a logical link there between, and linking to the previous information by means of the corresponding logical link, so as to maintain a history and evolution of the information.

The analysis module 140 receives the new information from the communication module 110. Each new information is treated sequentially. The new information may be treated in a first arrived - first served, in chronological order, in order of priority (based on type of event/transaction, party, jurisdiction, etc.), etc.

For each new information, the analysis module 140 instructs the integration module 120 to integrate the new information in the storage module 130. Then, the analysis module 140 verifies whether there is at least one relation between the new information and at least one previous information stored in the storage module 130, based on a set of predetermined rules. The relation could be any or several of the following: a party involved, a jurisdiction, a type of event/transaction, an amount, an event, a date, etc. If the analysis module 140 identifies at least one relation between the new information and at least one of the prior information, the analysis module 140 instructs the storage module 130 to add a corresponding logical link between the new information and the at least one of the previous information with which there is the at least one relation. The corresponding logical link added between the new information and the prior information with which a relation was identified, may indicate the type of logical link, and will assist with the monitoring of surveillance patterns, which will be explained later.

The analysis module 140 then proceeds with the verification of whether a declaration indicator should be assigned for the new information. Examples of declaration indicators will be further discussed. When the analysis module 140 determines that a declaration indicator must be assigned for the new information, such declaration indicator is stored in the storage module 130 for the new information.

The analysis module 140 further continues with the evaluation and assignment of a risk factor to the new information. The risk factor is determined based for example on one or several of the following: the identity of the entity, the type of information, the at least one logical link, etc. The risk factor is based on a set of predetermined parameters within the analysis module 140, and each parameter is given a corresponding weight. The risk factor is compounded based on all aspects of the new information and the logical links with the prior information. Examples of aspects considered in determining the risk factor, and the assigned risk factor will be provided further. The analysis module 140 further instructs the storage module 130 to store the risk factor assigned to the new information.

As illegal activity often happens not on a per event/transaction itself, but by a series of events performed in a certain fashion (time, order, chronology, types of parties involved, jurisdictions, etc.), the analysis module then proceeds with the verification of whether the new information with the at least one previous information with which it shares a logical link correspond to at least one of the surveillance patterns. If the new information with the at least one previous information sharing the logical link correspond to at least one of the surveillance patterns, the analysis module generates by means of the communication module a first type of alert for the new information and the prior information with which it shares the logical link.

The analysis module 140 further verifies whether the assigned risk factor for the new information is above a predetermined threshold, and if the assigned risk factor is above the predetermined threshold, it generates by means of the communication module a second type of alert for the new information.

The generated alerts may be conveyed in various forms. For example, the generated alerts may be compiled on a report to be reviewed by analysts on a regular basis. The alerts may alternately be generated on a screen of an analyst appointed for continuous verification of alerts, and followup. The alerts may further be stored in the storage module 130 by the analysis module 140, for future reference, or for extraction directly from the storage module. Storing of the alerts in correlation with the corresponding information (new or prior) in the storage module 130 further has the advantage of identifying which information or type of information results in multiple alerts, and improvement of the surveillance patterns, refining of the rules for determining the risk factor, faster identification of potential fraudulent schemes not already monitored by the surveillance patterns, etc.

In another aspect, the analysis module 140 further analyses for each new information whether the new information with the at least one previous information sharing a logical link correspond to at least one subset of at least one stored surveillance pattern. Although not all components of the surveillance pattern have not been met, it is advantageous in fraud prevention to monitor when a surveillance pattern is gradually being completed. For example, if the new information with the previous information sharing logical links corresponds to at least one subset (for example 80 or 90%) of a surveillance pattern, such a situation is identified by the analysis module 140 and stored in the storage module 130. Furthermore, a particular type of alert, i.e. a third alert, is generating by means of the communication module for the new information and corresponding prior information sharing a link, identifying which potential surveillance pattern is under completion, with its level of completion.

When a new type of fraud is being identified, the surveillance patterns used by the analysis module 140 are updated by an analyst, a responsible for the system 100, one or several employees supporting the system, etc, so as to ensure that the corresponding mechanisms used to perform the new type of fraud are monitored by a corresponding surveillance pattern.

The present system 100 further comprises a report generation module 150 for automatically generating a regulatory declaration for the new information when the first and/or second type of alert is generated.

### Declaration indicator

Declaration indicators are used to identify events/transactions, which must be automatically declared to legal authorities, as required by law. As each jurisdiction have different requirements for automatic declaration of specific events/transactions, the storage module 130 stores the required information for performing the automatic declaration to legal authorities.

For example, in Canada, Large Cash Transaction (LCTR) must be reported. In the United States, similar regulation requires automatic declaration of Currency Transaction (CTR). Transactions, which upon analysis are identified as requiring automatic declaration, are flagged by means of the declaration indicator. These transactions are automatically reported to the corresponding legal authority in the required format, without requiring any human intervention. Transactions flagged with the declaration indicator are further analyzed in perspective of other related transactions and information to assist in the detection of illegal activity.

Here is a list of exemplary transactions which according to 2010 regulations, would be automatically declared:

In Canada, any cash transaction (in money or transferred electronically) equal or greater than $10,000 CAD.

In Canada, any series of transactions performed by a client over a period of 24 hours, which is equal or greater than $10,000 CAD in cash.

In Canada, any electronic international transfer(s) which is equal or greater than $10,000 CAD over a 24 hour period from/to another country, including the emitting country and the recipient.

In the United States, any cash transaction (in money or transferred electronically) equal or greater than $10,000 USD.

In the United States, any series of transactions performed by a client over a period of 24 hours, which is equal or greater than $10,000 USD in cash.

In the United States, any electronic international transfer(s) is equal of greater than $10,000 USD over a 24 hour period from/to another country, including the emitting country and the recipient.

In Europe, any cash transaction (in money or transferred electronically) equal or greater than $5,000 €.

In Europe, any series of transactions performed by a client over a period of 24 hours, which is equal of greater than $5,000 € in cash.

In Europe, any electronic international transfer(s) equal of greater than $5,000 € over a 24 hour period from/to another country, including the emitting country and the recipient.

Any transaction related to a flagged individual or entity, etc.

The analysis module 140 may generate the automatic declarations with the assistance of a report generation module 150, on a per event/transaction basis, on a daily basis, on a weekly, or in any manner accepted by the responsible authorities.

### Risk factor

Many indicators are used to determine the risk factor of new information analyzed. Any new information with a risk factor over a predetermined threshold is alerted so that appropriate verification, and if required, investigation be performed.

For doing so, the present system and method analyze each new information received so as to determine the risk factor based on surveillance patterns and activities.

Here is a list of exemplary patterns and corresponding indicators. The present system and method are not limited to those patterns, and the corresponding indicator is not limited to the example provided.

Cash transaction in Canadian dollars (amount and type of transaction). A client withdraws $8,605 USD from his bank account. The corresponding value in Canadian dollars is $9,990. The type of transaction is to buy casino tokens. The risk factor given is high.

List of countries under sanction, volume of transactions to the account, type of activity, type of account, type of events/transactions. A client performs electronic transfers from his personal bank account for a recipient having an address in Lebanon, which is a country under Canadian sanction. The transfer funds are from deposits made days prior. These funds originate from a commercial account at another bank. The personal bank account is used only for large deposits and withdrawals, and not for any other type of transaction. The risk factor given is very high.

Portfolio diversity, type of growth of the portfolio, investment knowledge of the client, type of investments, volume of transactions, financial situation of the client. A client files certificate of shares for a company in his personal investments, and he only owns shares for this particular company. His investment skills are excellent, his investment portfolio aims for maximum growth, and the associated risk with this transaction is very high. Upon opening of the account, the strategy selected was for long-term growth, and not maximum growth. The client performs a lot of transactions of shares for this company. He files certificate of shares, buys and sells his shares. The client concentrates on a single share title. Such a behavior is suspicious, and might indicate insider trading. The risk factor given is high.

Location, term of possession, volume of purchases, volume of sales, links between the participating parties (family, partners). A client and his family and/or partners, over a period of 5 years, buy and sell more than three properties in a renewed location, i.e. where older buildings generating lower revenues neighbor newer high revenues buildings. Because of the high number of properties bought and sold, of the location, and the short term of possession of each property, the risk factor given is very high.

Other examples. Because insurance policies may be transformed into cash, they are an easily accessible source of money laundering. Subscriptions and selling of insurance policies for several members of the family are thus considered potential patterns for illegal activities. Links to organized crime are also given high risk factor. Individuals under surveillance and/or investigation by legal authorities and/or governments, and any new information linked thereto, are also given a high risk factor.

Other elements to be considered in the attribution of the risk factor. Properties and assets owned by third parties or trusts. Public information providing details and/or context surrounding the new and old information.

### Declaration

When it is determined that at least one declaration must be performed, the present system and method extract all the relevant information, and prepares the declaration in accordance with the regulations of the jurisdiction in which the declaration must be made. In some instances, it may be determined that multiple declarations are required, as the detected pattern involves multiple jurisdictions.

Here is an exemplary summarized list of information that would be declared to the Financial Transactions and Reports Analysis Centre of Canada (FINTRAC):

A detailed list of deposits in a bank account used to perform an electronic fund transfer;

A detailed list of electronic fund transfers with the recipient address;

A detailed list of links corresponding to the surveillance pattern detected; and

A list of steps undertaken during the analysis and investigation justifying the declaration.

### Confidentiality

As several laws regulate the declaration of confidential information, and these laws vary for each jurisdiction, the present system and method further comprises a mechanism to ensure anonymity of confidential information, while adding this anonymous information to the analysis and detection of illegal activity. To ensure proper handling of confidential information, the confidential information is stored so as to be anonymous and unique, which allows creation of logical links and association of roles to these anonymous entities. Only the individuals and entities having proper authority to access the confidential information is given access to the confidential information. However, the anonymous information is used in the analysis, so as to ensure timely generation of alerts and dynamic detection of illegal activities.

### Verification and investigation

When at least one alert has been generated, a verification procedure is performed and if necessary an investigation is instigated. The following provides some examples of instances where verification and investigations may be performed. The investigation may be performed at various levels, such as for example criminal charges, physical security, computer security, etc. as these activities may relate to illegal activity. The individuals linked to such activities are given high risk factor.

Client interrogation, due diligence request. The client may be questioned for his unusual cash transfers. When the explanations seem contradictory with the facts and situation at hand, the banks involved may be contacted to perform a due diligence on the account.

Investigation on origin of amounts, funds, and past activities of the recipient. A client deposits a bank draft of $503,000 in the name of his brother. The bank draft is dated October 2008, while his brother died in May 2008. The bank draft originates from a bank account in Nassau. During the verification and investigation process, the bank draft is not filed, and is returned to the client. The client explains that it is particularly lengthy and difficult to resolve a succession in a tax shelter country.

Past activities of the client, credit investigation, origin of the funds, risk of identity theft. A client makes a loan request to buy a condominium worth $260,000. He indicates that he would provide $60,000 in cash for that purchase. He also wanted to refinance his house for which he estimated a very high resale value. The house was sold to another person living at the same address. A verification of past activities of the client provides revenue too low to explain the $60,000, and an address (although for a different name) unfavorable at the credit office. The client has made several loan requests in the past three months, and his file contains an indication that he is in default with the government.

Property evaluation, history of purchase, loan antecedents, analysis of bank accounts balance, investigation on the links of the client. A client wishes to refinance his property. The requested amount is $500,000. He provides a property evaluation indicating a resale value of $835,000. Initially, the client had bought the house two years prior for $410,000, without a mortgage. The municipal evaluation then was of $497,200. The client indicated that he wanted to refinance his house to reimburse his sister, who had lend him money to buy the house. Balance of the personal bank accounts of the client is high, and he is linked to organized crime. The request is considered to have a very high risk factor, because the house was initially bought at a price lower than the municipal evaluation, and because of the link of the client to the organized crime.

### Dynamic improvement of analysis

After verification, and/or investigation, and/or declaration is/are made, when a new surveillance pattern is identified and confirmed, it is added to the stored surveillance patterns. Upon addition of the new surveillance pattern, an analysis is performed of the stored information to determine if any combination of linked stored information corresponds to the new surveillance pattern. If a combination of linked stored information corresponds to the new surveillance pattern, the appropriate alert is generated.

Further to adding new surveillance patterns, the analysis module 140 is further adapted for monitoring performance of the various surveillance patterns, so as to allow improvement, adjustment or downgrading of the stored surveillance patterns. For example, a surveillance pattern that generates a relatively high percentage of false positive may need to be reviewed, the order of the surveillance patterns may be ordered by success rate so as to quickly identify potential illegal activities, the order of the surveillance patterns may be based on a percentage or number of declarations resulting from each surveillance pattern, etc.

Thus by continuously and dynamically improving the stored surveillance patterns, the analysis module may perform more accurate analysis and improve the efficiency of the verification, while reducing the generation of non-necessary alerts.

### Tools to assist in verification and investigation

The present system further comprises a series of tools and relies on various technologies to offer an extended support to analysts and investigators. For example, the present system further comprises the following tools, which are not shown on Figure 1 for clarity purposes:

In the storage module, an identity module for managing identities of individuals, entities and organizations. The module may manage one or several of the following: details of official documents used, alias, borrowed name, identity theft, etc.

In the analysis module, an evolution function for analyzing the behavior and evolution of any person, entity or organization, and also identifying any change in such behavior.

In the communication module, an advanced internet searching function, to allow querying and gathering of additional related information from public registries, blogs, social networks, personal pages, etc.

An additional image/picture management module, to manage images/pictures from various sources, and to perform analysis of those images/pictures for face recognition, morphology analysis, origin of image/picture, geographic location where the image/picture was taken, etc.

An additional automated list management module, for automatically filtering and searching lists, using phonetic, fuzzy logic, or any other type of searching capability.

An advanced graphical interface allowing visualizing of links over multiple dimensions between the various persons/entities/organization, or in the form of diagrams.

The communication module 110 is adapted for communicating with a plurality of external systems and sources, so as to provide complete collaboration between parties involved against fraud. The communication module 110 further provides communication tools between the subscriber/client/authority, so as to ensure timely and efficient declaration.

### Simulation module

The present system further comprises a simulation module. The simulation module generates and provides new information to the communication module 110, which corresponds to information and/or events/transactions to be tested. Alternately or concurrently, the simulation module may further store new fraudulent scenarios in the storage module 130. The simulation information and the new fraudulent scenarios are treated by the analysis module 140, as would any other new information or surveillance pattern. By performing simulations using the information stored in the storage module 130 and the surveillance patterns, the analysis module 140 assists in improving the quality of the analysis and reducing the false alerts.

The present system is thus more than a tool to assist in the fight against money laundering, but also allows storage and management of complete, filtered and analyzed information, over multiple areas of interest and jurisprudences, so as to assist in risk management of frauds, money laundering, fight against terrorist financing and other various types of illegal activities. Also, because of its reporting capability, the present system also assists in financial and police investigations.

### Method

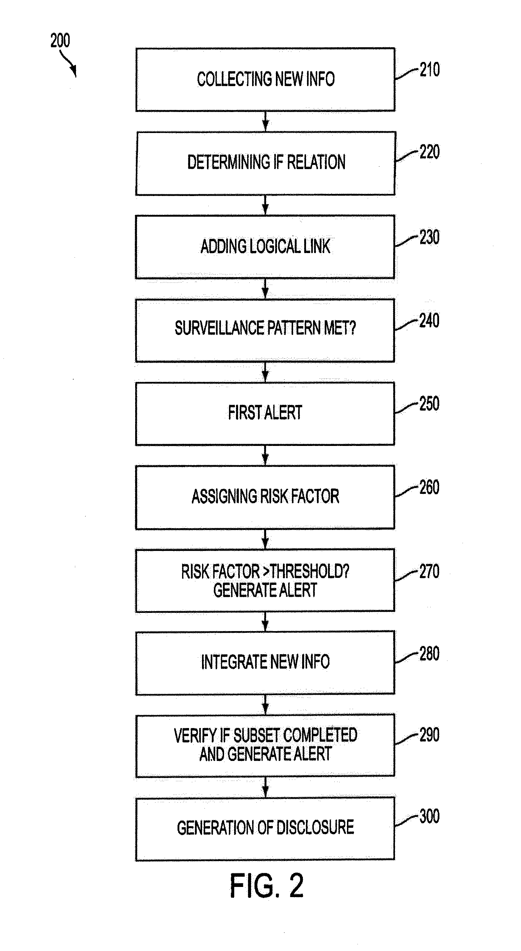

Reference is now made to Figure 2, which is a flowchart of the present method 200. The method 200 starts with collecting new information 210, each new information comprising at least an identity of an entity and a type of information. Then, the method proceeds as follows for each new information collected.

The method determines 220 whether there is at least one relation between the new information and at least one of the previous information stored in the storage module or a database. If there is at least one relation, the method adds a logical link 230 between the new information and the at least one of the previous information with which there is the at least one relation.

Then, the method verifies 240 whether the new information with the at least one previous information sharing the logical link corresponds to at least one of the plurality of stored surveillance patterns. If the new information with the at least one previous information sharing the logical link correspond to at least one of the plurality of stored surveillance patterns, the method generates a first type of alert 250 for the new information.

The method then pursues with assigning a risk factor 260 for the new information. The risk factor is determined as previously discussed and exemplified.

The method then verifies 270 whether the assigned risk factor for the new information is above a predetermined threshold. If the assigned risk factor is above the predetermined threshold, the method generates the second type of alert for the new information.

The method then integrates 280 the new information in the storage module or database storing the previous information, and stores with the new information the logical link, the surveillance pattern if applicable and the assigned risk.

The method may further verify whether the new information with the at least one previous information sharing the logical link correspond to at least one subset of at least one of the stored surveillance patterns. If the new information with the at least one previous information sharing the logical link correspond to at least one subset of the stored surveillance patterns, the method may further generate a third type of alert for the new information.

The method pursues with the automatic generation 300 of the legal declaration for the new information when the first and/or second type of alert is generated, if appropriate.

The present system and method have been described by way of preferred embodiments. It should be clear to those skilled in the art that the described preferred embodiments are for exemplary purposes only, and should not be interpreted to limit the scope of the present system and method. The system and method as described in the description of preferred embodiments can be modified without departing from the scope of the appended claims, which clearly delimit the protection sought.

## Claims

1. A method for dynamically detecting illegal activity, the method comprising:
collecting new information, each new information comprising at least an identity of an entity and a type of information;
for each new information:
determining whether there is at least one relation between the new information and at least one previous information stored in a storage module, and if there is at least one relation, adding a logical link between the new information and the at least one of the previous information with which there is the at least one relation;
verifying whether the new information with the at least one previous information sharing the logical link correspond to at least one of a plurality of stored surveillance patterns, and if the new information with the at least one previous information sharing the logical link correspond to at least one of the plurality of stored surveillance patterns, generating a first type of alert for the new information;
assigning a risk factor to each new information, the risk factor being determined based on one or several of the following: the identity of the entity, the type of information, an amount or the at least one logical link;
verifying whether the assigned risk factor for the new information is above a predetermined threshold, and if the assigned risk factor is above the predetermined threshold, generating a second type of alert for the new information; and
integrating the new information in the storage module, and storing with the new information the logical link and the assigned risk factor.

2. The method of claim 1, wherein collecting the new information is performed by electronic transfer of event/transaction activity from one or several of the following: a store, a company, a financial institution, a real estate agent, an insurance company, an art dealer, a broking company, and a government agency, or of event information from any legal or moral entity.

3. The method of claim 2, wherein collecting the new information further comprises searching Internet for information on at least one of the following: the entity, and context of the transaction activity.

4. The method of claim 2, wherein the transaction activity comprises one of the following: a financial transaction, a real estate transaction, an insurance transaction, a broking transaction, a precious stone transaction, an expensive acquisition, an art transaction, and an automobile transaction or any other type of transaction consisting of a transfer or an exchange of goods, services or funds.

5. The method of claim 1, wherein the identity of the entity comprises one or several of the following: a personal name, a company name, a company number, a personal identification number, and an alias.

6. The method of claim 1, further comprising automatic generation of a regulatory declaration for the new information when the first second and/or third type of alert is generated.

7. The method of claim 2, wherein each surveillance pattern comprises at least one of a plurality of the following: an amount for the transaction activity, a sequence of transaction activities over time, a sequence of transaction activities over jurisdictions, a sequence of transaction activities over involved parties.

8. A system for dynamically detecting illegal activity, the system comprising:
a communication module for collecting new information, each new information comprising at least an identity of an entity and a type of information;
a storage module for storing previous information, the new information, logical links, and surveillance patterns;
an analysis module for analyzing for each new information:
whether there is at least one relation between the new information and at least one previous information stored in the storage module, and if there is at least one relation, adding a logical link between the new information and the at least one of the previous information with which there is the at least one relation;
a risk factor to be assigned to each new information, the risk factor being determined based on one or several of the following: the identity of the entity, the type of information, and the at least one logical link;
whether the new information with the at least one previous information sharing the logical link correspond to at least one of the surveillance patterns, and if the new information with the at least one previous information sharing the logical link correspond to at least one of the surveillance patterns, generating by means of the communication module a first type of alert for the new information; and
whether the assigned risk factor for the new information is above a predetermined threshold, and if the assigned risk factor is above the predetermined threshold, generating by means of the communication module a second type of alert for the new information; and
an integration module for integrating the new information, the logical link and the assigned risk in the storage module.

9. The system of claim 8, wherein the communication module collects the new information by electronic transfer of transaction activity from one or several of the following: a store, a company, a financial institution, a real estate agent, an insurance company, an art dealer, a broking company, and a government agency.

10. The system of claim 8, wherein the communication module further searches Internet for information on at least one of the following: the entity, and context of the transaction activity.

11. The system of claim 8, wherein the new information relates to one of the following: a financial transaction, a real estate transaction, an insurance transaction, a broking transaction, a precious stone transaction, an expensive acquisition, an art transaction, an automobile transaction, and an exchange or transfer of goods, services or funds.

12. The system of claim 8, wherein the identity of the entity comprises one or several of the following: a personal name, a company name, a company number, a personal identification number, and an alias.

13. The system of claim 8, wherein the analysis module further analyses for each new information whether the new information with the at least one previous information sharing the logical link correspond to at least one subset of at least one stored surveillance pattern, and if the new information with the at least one previous information sharing the logical link correspond to at least one subset of at least one stored surveillance pattern, generating by means of the communication module a third type of alert for the new information.

14. The system of claim 8, further comprising report generation module for automatically generating a regulatory declaration for the new information when the first, second and/or third type of alert is generated.

15. The system of claim 8, wherein each surveillance pattern comprises at least one of a plurality of the following: an amount for the transaction activity, a sequence of transaction activities over time, a sequence of transaction activities over jurisdictions, a sequence of transaction activities over involved
